**Europäisches Patentamt**

**European Patent Office**

**Office européen des brevets**

(19)

(11) Numéro de publication: **0 193 469**
**A2**

(12) # DEMANDE DE BREVET EUROPEEN

(21) Numéro de dépôt: **86400407.2**

(22) Date de dépôt: **26.02.86**

(51) Int. Cl.⁴: **H 04 M 9/10**

(30) Priorité: **27.02.85 FR 8502828**

(43) Date de publication de la demande:
**03.09.86 Bulletin 86/36**

(84) Etats contractants désignés:
**BE DE FR GB IT NL**

(71) Demandeur: **JEUMONT-SCHNEIDER Société anonyme dite:**
**31-32, Quai de Dion Bouton**
**F-92811 Puteaux Cedex(FR)**

(72) Inventeur: **Brossaud, Serge**
**Les Moulins**
**F-71230 St Romain/Gourdon(FR)**

(72) Inventeur: **Terrier, Laurent**
**Le Salève Bt A, Appt.7 rue Ravel Bois Jolivet**
**F-74130 Bonneville(FR)**

(74) Mandataire: **Lejet, Christian et al,**
**Société JEUMONT-SCHNEIDER 31-32, Quai de Dion Bouton**
**F-92811 Puteaux Cedex(FR)**

(54) **Procédé et dispositif pour la commande d'un poste téléphonique à main libre fonctionnant en alternat.**

(57) L'invention concerne un procédé et un dispositif pour déclencher le basculement d'un inverseur commandant la mise en position réception ou émission d'un poste téléphonique dit à main libre fonctionnant en alternat.

Selon l'invention, la position de l'inverseur (8) est fonction du signe de la différence entre les amplitudes du signal analogique émis intégré et du signal analogique reçu intégré. De préférence, le signal reçu est prélevé en aval de l'inverseur tandis que le signal émis est prélevé en amont. Un retard est apporté à la mise en position réception de l'inverseur (8).

Un second signal reçu est prélevé en amont de l'inverseur de manière à annuler le retard apporté au changement de position de ce dernier si l'amplitude du signal intégré correspondant devient important.

Application à la téléphonie.

## PROCEDE ET DISPOSITIF POUR LA COMMANDE D'UN POSTE TELEPHONIQUE A MAIN

## LIBRE FONCTIONNANT EN ALTERNAT

La présente invention concerne les postes téléphoniques dits à main libre et fonctionnant en alternat, et, plus particulièrement, un procédé et un dispositif pour déclencher le basculement d'un inverseur commandant la mise en position réception ou émission de tels postes téléphoniques. On dit d'un poste téléphonique qu'il est à main libre dès lors qu'il n'est pas nécessaire de porter le microphone et le haut-parleur du combiné devant respectivement la bouche et l'oreille de celui qui l'utilise.

Toutefois, dans un tel cas, il n'y a plus d'écran acoustique entre le microphone et le haut parleur et il en résulte très rapidement un effet Larsen.

Diverses solutions ont été recherchées pour obvier à cet inconvénient. Le brevet français 2 466 150 décrit, par exemple, un système permettant de faire fonctionner le poste en duplex. De telles solutions sont généralement très coûteuses et ne se justifient pas réellement puisque deux interlocuteurs parlent très rarement simultanément.

Une solution simple consiste à faire fonctionner le poste téléphonique en simplex. Toutefois, dans ce cas, un organe si possible automatique doit décider du sens de transmission des signaux. Cet organe, doit en prati-que, résulter d'un compromis car le signal émis par le microphone comprend notamment aussi bien des bruits ambiants locaux que de la parole, tandis que le signal reçu par le haut-parleur comprend notamment aussi bien des bruits de ligne que de la parole, avec un taux d'affaiblissement qui n'est pas prévisible.

La présente invention a pour but de pallier à ces problèmes de manière à permettre un bon fonctionnement alterné en émission ou en réception du poste téléphonique quelle que soit la qualité des signaux reçus ou émis, quelle que soit la position relative du microphone et du haut-parleur, et quelles que soient les qualités acoustiques du poste téléphonique et de la pièce où il est utilisé.

On parlera ci-après du basculement d'un inverseur commandant la mise en position réception ou émission du poste téléphonique. Il est évident que cette expression définit une fonction qui peut être effectuée par tout moyen, par exemple, par commande d'un affaiblissement maximal ou progressif du signal sur la ligne inutilisée.

Selon un aspect de la présente invention, la position de l'inverseur est fonction du signe de la différence entre les amplitudes du signal analogique émis intégré et du signal analogique reçu intégré. De préférence, le signal reçu est prélevé en aval de l'inverseur tandis que le signal émis est prélevé en amont de l'inverseur.

De préférence, on apporte un retard à la mise en position réception de l'inverseur, tandis qu'un second signal reçu est prélevé en amont de l'inverseur pour annuler le retard dans certains cas.

De préférence, on ajoute un signal continu de faible amplitude à l'un des signaux intégrés de manière que l'inverseur soit dans une position déterminée au repos.

De préférence, le signal reçu intégré est également utilisé pour commander le gain de l'intégrateur du signal émis dans certaines conditions, notamment pour diminuer l'influence du signal émis intégré pendant un court instant au début de tout nouveau signal reçu.

De préférence encore, on ajoute au signal reçu intégré un deuxième signal émis intégré avec une constante de temps supérieure de manière à modifier le seuil de basculement de l'inverseur.

L'invention sera mieux comprise et d'autre buts, avantages et caractéristiques de celle-ci apparaitront plus clairement à la lecture de la des-

cription qui suit d'un dispositif mettant en oeuvre le procédé, description donnée à titre non limitatif et à laquelle une planche de dessin est
annexée.

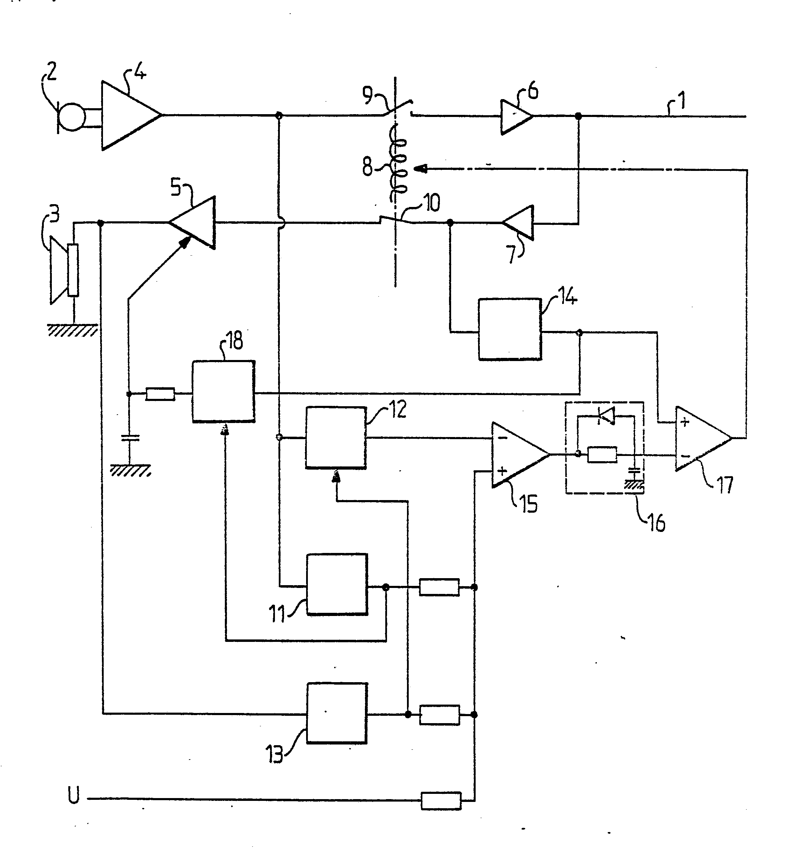

La figure unique représente schématiquement un dispositif conforme à la
présente invention.

En référence maintenant à cette figure, on a représenté schématiquement
l'un des deux fils l'reliant le poste téléphonique à un autocommutateur
non représenté. Le poste téléphonique comporte un microphone 2 et un
haut-parleur 3 respectivement reliés aux circuits 4,5 d'amplification des
signaux, et aux autres circuits 6,7 du poste téléphonique.

Un inverseur 8, schématiquement représenté par une bobine, commande
l'ouverture ou la fermeture - respectivement la fermeture ou l'ouvertured'un interrupteur - respectivement 9,10 - disposé en série dans la ligne
respectivement d'émission et de réception.

On comprendra que, pour éviter tout effet Larsen, l'un des interrupteurs
doit être ouvert lorsque l'autre est fermé.

Bien évidemment, un tel interrupteur peut être réalisé électroniquement
aussi bien au moyen de bascules que de circuits à affaiblissement contrôlé.

Le signal émis est prélevé en amont de l'inverseur 8 tandis qu'un premier
signal reçu est prélevé en aval de cet inverseur et un deuxième signal
reçu est prélevé en amont de cet inverseur. Le signal émis prélevé est
appliqué à un intégrateur 11 et à un intégrateur 12 tandis que le premier
signal reçu prélevé en aval est appliqué à un intégrateur 13 et que le
deuxième signal reçu prélevé en amont est appliqué à un intégrateur 14.

De tels intégrateurs peuvent être, par exemple constitués chacun par un
amplificateur opérationnel dont les bornes d'entrée et de sortie sont
shuntées par une diode pourvue d'une résistance en parallèle, et la borne
de sortie reliée à la masse par l'intermédiaire d'un condensateur et
délivrant en pratique un signal continu redressé fonction de la valeur
crête du signal d'entrée.

La constante de temps des intégrateurs 12, 13 et 14 est relativement faible (inférieure à 10 millisecondes) tandis que celle de l'intégrateur 11 est relativement élevée (5 à 10 secondes).La borne de sortie de l'intégrateur 12 est reliée à une borne d'un comparateur 15, à l'autre borne d'entrée duquel est appliquée la somme des signaux de sortie des intégrateurs 11 et 13 et, éventuellement, d'un signal continu de faible amplitude destiné à élever légèrement le seuil du comparateur 15 et ainsi mettre l'inverseur 8 en position de réception lorsqu'il n'y a plus de signal et que l'ensemble est au repos. La sortie du comparateur 15 est connectée à un circuit retardateur 16 présentant une constante de temps suffisante dans un sens pour que l'inverseur ne bascule pas entre chaque syllabe, par exemple de l'ordre de 200 millisecondes et très faible dans l'autre sens pour que le temps de passage du repos à la position émission soit très court, évitant ainsi la perte de la première syllabe du premier mot prononcé devant le microphone 2. La borne de sortie de l'intégrateur 14 est connectée à une borne d'entrée d'un deuxième comparateur 17, à l'autre borne d'entrée duquel est appliqué le signal issu du circuit retardateur 16.

Le changement de signe du signal de sortie de ce deuxième comparateur 17 peut alors être directement utilisé pour commander le basculement de l'inverseur 8.

La borne de sortie de l'intégrateur 14 est également reliée à un intégrateur 18 dont le signal de sortie sert à diminuer le gain de l'amplificateur 5 lorsque le signal reçu sur la ligne 1 est trop élevé ; cette commande est modérée par le signal de sortie de l'intégrateur 11.

Pour décrire le fonctionnement de ce dispositif, il faut d'abord préciser que les deux intégrateurs 12 et 13 sont indispensables. En effet, avec une constante de temps relativement faible, ils vont permettre de comparer à tout instant l'amplitude des signaux dans les lignes de réception et d'émission.

En prenant pour hypothèse qu'il n'y a, au moment initial, aucun signal sur la ligne 1, l'inverseur est mis au repos en position de réception.

5

0193469

Ceci est obtenu au moyen d'un signal continu qui est ajouté au signal reçu intégré en 13 de manière à remonter le seuil du comparateur 15.

Si un signal apparait en réception, celui-ci est intégré en 13 et le signe du signal de sortie des comparateurs 15 et 17 ne change pas.

Si un signal apparait en émission, celui-ci est intégré en 12 et vient à être comparé en 15 au signal reçu intégré. S'il présente une amplitude suffisante, le signal de sortie du comparateur 15 change de signe et est appliqué au deuxième comparateur 17. Comme il présente une amplitude supérieure à celle du signal reçu intégré, le signal issu du deuxième comparateur change de signe, ce qui commande le basculement de l'inverseur 8. A ce moment-là, le commutateur 9 est fermé et le commutateur 10 est ouvert. L'intégrateur 13 ne reçoit alors plus aucun signal.

Lorsqu'il n'y a plus de signal émis, et grâce au signal continu appliqué au comparateur 15, le signal de sortie de ce dernier change à nouveau de signe. Ce changement de signe est transmis au comparateur 17 après un certain délai nécessaire pour éviter de re-faire basculer l'inverseur 8 si l'absence de signal émis correspond à un blanc normal dans une phase entre deux syllabes. Si avant la fin de la constante de temps du circuit retardateur 16, il apparait un signal important sur la ligne 1 non dû au microphone 2, le signal de sortie de l'intégrateur 14 permet de re-basculer en réception plus rapidement que prévu. Dans ce but, le signal appliqué à l'intégrateur 14 est prélevé en amont de l'inverseur 8.

Le rôle de l'intégrateur 11 dont la constante de temps est relativement élevée, est d'augmenter le seuil du comparateur 15 en fonction du bruit ambiant autour du microphone 2.

En effet, le signal qui en est issu est retranché du signal issu de l'intégrateur 12 et permet de pouvoir repasser en position réception si nécessaire.

Enfin, un correspondant éloigné ne risque pas de se couper lui-même la parole du fait de la liaison acoustique entre le haut-parleur 3 et le microphone 2, car le signal issu du circuit intégrateur 13 est utilisé pour abaisser le gain de l'intégrateur 12 pendant un court instant au début de tout nouveau signal reçu, de manière que le signal de sortie du comparateur 15 ne puisse pas changer de signe inopportunément.Ce système doit être extrêmement rapide pour pouvoir intervenir avant le retour de l'écho du haut-parleur 3 sur le microphone 2.

Bien que seul un mode préféré de réalisation de l'invention, il est évident que toute modification apportée par l'Homme de l'Art dans le même esprit ne sortirait pas du cadre de la présente invention telle que précisée dans les revendications qui suivent.

7

0193469

1 - Procédé pour déclencher le basculement d'un inverseur commandant la mise en position réception ou émission d'un poste téléphonique dit à main libre fonctionnant en alternat, caractérisé en ce que la position de l'inverseur (8) est fonction du signe de la différence entre les amplitudes du signal analogique émis intégré et du signal analogique reçu intégré.

2 - Procédé selon la revendication 1 caractérisé en ce que le signal reçu est prélevé en aval dudit inverseur (8) tandis que le signal émis est prélevé en amont dudit inverseur (8).

3 - Procédé selon la revendication 1 ou 2 caractérisé en ce qu'un retard est apporté à la mise en position réception dudit inverseur (8).

4 - Procédé selon la revendication 3 caractérisé en ce qu'un second signal reçu est prélevé en amont dudit inverseur de manière à annuler le retard apporté au changement de position dudit inverseur si l'amplitude du signal intégré correspondant devient important.

5 - Procédé selon l'une quelconque des revendications 1 à 4 caractérisé en ce que l'on ajoute un signal continu de faible amplitude à l'un des signaux analogiques intégrés, de manière que l'inverseur soit dans une position déterminée au repos.

6 - Procédé selon l'une quelconque des revendications 1 à 5 caractérisé en ce qu'un deuxième signal émis intégré avec une constante de temps élevée par rapport à celle de la première intégration, est ajouté audit signal analogique reçu intégré de manière à modifier le seuil de basculement dudit inverseur.

0193469

7 - Procédé selon l'une quelconque des revendications 1 à 5, caractérisé en ce que le signal reçu intégré diminue l'influence du signal émis intégré pendant un court instant au début de tout nouveau signal reçu

8 - Dispositif pour déclencher le basculement d'un inverseur commandant la mise en position réception ou émission d'un poste téléphonique dit à main libre fonctionnant en alternat, par l'intermédiaire de deux interrupteurs (9,10) disposés en série respectivement dans la ligne d'émission et dans la ligne de réception et constituant ledit inverseur (8), ledit dispositif mettant en oeuvre le procédé selon au moins une des revendications 1 à 7, caractérisé en ce qu'il comprend un premier et un deuxième intégrateurs (12,13) à faible constante de temps dont les entrées sont respectivement reliées en amont dudit interrupteur (9) sur la ligne d'émission et en aval dudit interrupteur (10) sur la ligne de réception, et dont les sorties sont respectivement reliées aux deux bornes d'entrées d'un premier comparateur d'amplitude (15), le signe du signal de sortie dudit comparateur (15) commandant la position position dudit inverseur (8) et par suite celle desdits interrupteurs (9,10).

9 - Dispositif selon la revendication 8, caractérisé en ce que le signal de sortie dudit premier comparateur (15) est appliqué à un circuit retardateur (16) de manière à retarder toute mise en position réception dudit inverseur (8).

10 - Dispositif selon la revendication 9, caractérisé en ce qu'il comprend un troisième intégrateur (14) à faible constante de temps dont la borne d'entrée est connectée en amont dudit inverseur (8) sur la ligne de réception et la borne de sortie à l'une des entrées d'un deuxième comparateur (17) à l'autre entrée duquel est appliqué le signal de sortie dudit circuit retardateur (16) de manière à annuler le retard au changement de position dudit inverseur si l'amplitude du signal reçu en amont de l'inverseur devient important.

11- Dispositif selon l'une quelconque des revendications 8 à 10, caractérisé en ce qu'un signal continu de faible amplitude est ajouté sur la borne d'entrée dudit premier comparateur (15) à laquelle est déjà relié ledit deuxième intégrateur (13).

9

0193469

12- Dispositif selon l'une quelconque  des revendications 8  à 11, caractérisé en ce qu'il comprend un quatrième intégrateur à constante de temps
élevée (11) dont la borne d'entrée  est reliée en amont dudit inverseur
(8) sur la ligne d'émission et dont  le signal de sortie est ajouté sur
la borne d'entrée  dudit premier comparateur  (15) à laquelle  est déjà
relié ledit deuxième intégrateur (13).

0193469